# EUROPÄISCHE PATENTSCHRIFT

(11) **EP 1 600 056 B1**
(45) Veröffentlichungstag und Bekanntmachung des Hinweises auf die Patenterteilung: **25.11.2009**
(21) Anmeldenummer: 05015403.8
(22) Anmeldetag: 13.07.2001
(51) Int. Cl.: A01N 47/36

(54) **Herbizide Mittel**
Herbicidal composition
Composition herbicide

(30) Priorität: 25.07.2000 DE 10036002
(43) Veröffentlichungstag der Anmeldung: 30.11.2005
(62) Teilanmeldung aus: 01969385.2
(73) Patentinhaber: Bayer CropScience AG, 40789 Monheim (DE)
(72) Erfinder: Bickers, Udo, Dr., 49835 Wietmarschen (DE); Bieringer, Hermann, Dr., 65817 Eppstein (DE); Frisch, Gerhard, Dr., 61273 Wehrheim (DE); Hacker, Erwin, Dr., 65239 Hochheim (DE); Huff, Hand Philipp, Dr., 65817 Eppstein (DE)

(56) Entgegenhaltungen:
- EP-A- 0 402 770
- WO-A-89/12394
- WO-A-93/25074
- WO-A-95/02327
- WO-A-96/00010
- WO-A-98/49894
- DE-A- 3 636 994
- ANONYMOUS: "Method of controlling aquatic vegetation" RESEARCH DISCLOSURE, Nr. 21233, Dezember 1981 (1981-12), XP001022458
- DATABASE WPI Section Ch, Week 199330 Derwent Publications Ltd., London, GB; Class C02, AN 1993-239884 XP002182896 & JP 05 163106 A (TAKEDA CHEM IND LTD) 29. Juni 1993 (1993-06-29)
- S. MATSUMOTO ET AL.: "Effect of humectants on pesticide uptake through plant leaf surfaces" ADJUVANTS FOR AGROCHEMICALS, 1992, Seiten 261-271, XP001022459 CRC, Boca Raton, FLA
- G. T. COOK & H. J. DUNCAN: "Uptake of aminotriazole from humectant-surfactant combinations and the influence of humidity" PESTIC. SCI., Bd. 9, 1978, Seiten 535-544, XP001022485

## Beschreibung

Die Erfindung betrifft das technische Gebiet der Pflanzenschutzmittel, insbesondere Wirkstoff-Tensid-Humectant-Kombinationen.

Zur Bekämpfung unerwünschter Schadpflanzen stehen dem Anwender eine Vielzahl von Herbiziden zur Verfügung, die, in Abhängigkeit von den biologischen Eigenschaften der Herbizide, der Art der zu bekämpfenden Schadpflanzen und der Art der Nutzpflanzen zum Einsatz gelangen können. Dabei werden die herbiziden Wirkstoffe so zubereitet, daß sie möglichst optimal anzuwenden sind und eine hohe Wirksamkeit besitzen. Zur Anwendung kommen dabei verschiedene Formulierhilfsmittel wie Netzmittel, Dispergiermittel, Emulgatoren, Entschäumer, Lösungsmittel oder Füllstoffe.

Die Sicherheit und das Niveau der Schadpflanzenkontrolle variiert jedoch in Abhängigkeit von Umweltfaktoren wie Temperatur, Luft- und Bodenfeuchte, Lichteinstrahlung, Niederschlägen oder Bodenart, was bei Minderwirkung zu Nachbehandlungen oder bei Überdosierung Schädigung von Nutzpflanzen führen kann.

Eine höhere Wirkungssicherheit bietet auch ökologische Vorteile. Um einer Minderwirkung zu entgehen, erhöht der Anwender häufig die auszubringende Wirkstoffmenge. Diese Verhaltensweise hat jedoch den Nachteil, dass das Potential der Wirkstoffe, die Bodenfauna zu beeinflussen, im Boden zu leachen oder in Oberflächengewässer getragen zu werden, steigt.

In Adjuvants for Agrochemicals, CRC Press, Inc. (1992) S. 261 - 271 wird der Einfluß von Humectants auf verschiedene Pestizide beschrieben. Aus WO 89/02570 ist bekannt, dass Humectants in Verbindung mit bestimmten Silikontensiden die Wirksamkeit von Herbiziden steigern können.

Res. Discl. Nr. 21233 (19881) offenbart herbizide Mittel enthaltend bestimmte Sulfonylharnstoffe in Kombination mit einem Tensid und einem Humectant in einem nicht-phytotoxischen Lösungsmittel.

JP 5 163 106 A offenbart herbizide Mittel aus bestimmten Sulfonylharnstoffen und von Silikontensiden verschiedenen Tensiden, die auch Ethylenglykol enthalten können.

WO 93/25074 A1 offenbart herbizide Granulate aus bestimmten Sulfonylharnstoffen, die formuliert sind mit Tensiden und mit weiteren Komponenten, z.B. Polyethylenglykolen mit einem MW von 6000 - 10.000 oder EO-PO-Mischpolymerisaten.

WO 98/49894 A1 offenbart herbizide Granulate aus Sulfonylhamstoff in Kombination mit anionischen Tensiden und komplexierenden Verbindungen wie Milchsäure oder Zitronensäure und weiteren Verbindungen die als hygroskopisch eingestuft werden.

WO 93/13658 A1 und WO 98/42192 A1 offenbaren herbizide Mittel enthaltend jeweils bestimmte Sulfonylharnstoffe, eines oder mehrere von Silikontensiden verschiedene Tenside und eines oder mehrere Humectants.

Aufgabe der vorliegenden Erfindung war es, ein herbizides Mittel mit verbessertem Wirkniveau und verbesserter Wirkungssicherheit zur Verfügung zu stellen. Diese Aufgabe wird gelöst durch ein spezielles herbizides Mittel, welches herbizide Wirkstoffe in Kombination mit bestimmten Tensiden und Humectants enthält.

Die vorliegende Erfindung betrifft somit ein herbizides Mittel, enthaltend
a) Mesosulfuron-methyl oder dessen Vatruimalz
b) eines oder mehrere Tenside vom Typ der C₈-C₂₀-Alkylpolyglykolethersulfate, und
c) eines oder mehrere Humectants.

Mesosulfuron-methyl und dessen Natriumsalz sind z.B. bekannt aus WO 95/10507 oder aus Agrow Nr. 347 3. März 2000, Seite 22 (PJB Publications Ltd. 2000).

Ein Kohlenwasserstoffrest im Sinne dieser Beschreibung ist ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl; Aryl bedeutet dabei ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Ein heterocyclischer Rest oder Ring (Heterocyclyl) im Sinne dieser Beschreibung kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Dioxolanyl, Morpholinyl, Tetrahydrofuryl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Substituierte Reste im Sinne dieser Beschreibung, wie substituierte Kohlenwasserstoffreste, z.B. substituiertes Alkyl, Alkenyl, Alkinyl oder Aryl wie Phenyl und Benzyl, oder substituiertes Heterocyclyl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen (Fluor, Chlor, Brom, Jod), Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano.

Ein Acylrest im Sinne dieser Beschreibung bedeutet den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestern, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{x}, CS-R^{x}, CO-OR^{x}, CS-OR^{x}, CS-SR^{x}, SOR^{Y} oder SO₂R^{Y}, wobei R^{x} und R^{Y} jeweils einen C₁-C₁₀-Kohlenwasserstoffrest wie C₁-C₁₀-Alkyl oder C₆-C₁₀-Aryl bedeuten, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{X} und R^{Y} bedeuten Aminocarbonyl, oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl.
Acyl bedeutet beilspielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Die in den erfindungsgemäßen herbiziden Mitteln enthaltenen Tenside b) sind vom Typ der C₈-C₂₀-Aklylpolyglykolethersulfate, vorzugsweise C₁₀-C₁₈-Alkylpolyglykolethersulfate, die vorzugsweise in Form ihrer Salze, z.B. Alkalisalze, wie Natrium- oder Kaliumsalze, und/oder Ammoniumsalze, aber auch als Erdalkalisalze wie Magnesiumsalze verwendet werden, wobei vorzugsweise 2 bis 5 Ethylenoxyeinheiten im Polyglykolteil enthalten sind. Besonders bevorzugt ist z.B. C₁₂1C₁₄-Fettalkoholdiglykolethersulfat-Natrium (Handelsname z.B. Genapol^{®} LRO, Clariant GmbH).

Unter einem Humectant im Sinne der vorliegenden Erfindung wird eine Verbindung verstanden, welche in der Lage ist Wasser physikalisch aufzunehmen und/oder Wasser zu speichern. Bevorzugte Humectants sind z.B. hygroskopische Verbindungen.

Als Humectant c) können in den erfindungsgemäßen herbiziden Mitteln z.B. folgende Stoffe enthalten sein:
Mg SO₄, mehrwertige Alkohole wie Ethylenglykol, Propylenglykol, Butandiol, Glycerin und Pentaerythrid, sowie deren Ether und Ester, z.B. Ethylen, Glykolether, Propylenglykolether oder Glycerinester;
Polyalkylenglykole wie Polyethylenglykole (vorzugsweise mit einem Molekulargewicht von 500 - 60.000), Polypropylenglykole (vorzugsweise mit einem Molekulargewicht von 600 - 75.000) und Ethylenoxid (EO) - Propylenoxid (PO) - Mischpolymerisate z.B. mit EO-PO-, EO-PO-EO- oder PO-EO-PO-Einheiten; Zucker wie Hexosen, Pentosen, Molasse, Alkylpolysaccharide und Xanthane, z.B. die Malitol^{®}-Marken von Salim Oleo Chemicals wie Maltitol^{®}75; Gelatine; Cellulosederivate wie wasserlösliche Ligninsulfonate oder Hydroxycellulosen; Zitronensäure und Zitronensäurederivate wie Zitronensäuresalze, z.B. Alkali-, Erdalkali- oder Ammoniumzitronensäuresalze wie Na-Citrat; Milchsäure und
Milchsäurederivate wie Milchsäuresalze, z.B. Alkali-, Erdalkali- oder Ammoniummilchsäuresalze wie Na-Lactat z.B. in Form ihrer Racemate (DL) oder der einzelnen optischen Isomere z.B. D-Na-Lactat und L-Na-Lactat; Weinsäure und
Weinsäurederivate wie Weinsäuresalze, z.B. Alkali-, Erdalkali- oder Ammoniumweinsäuresalze wie Na-Tartrat, z.B. in Form ihrer Racemate (Traubensäure) oder der einzelnen optischen Isomere, z.B. (+)-Na-Tartrat und (-)-Na-Tartrat; Asparaginsäure und Asparaginsäurederivate wie Asparaginsäuresalze, z.B. Alkali-, Erdalkali- oder Ammoniumasparaginsäuresalze wie Na-Asparagat, z.B. in Form ihrer Racemate (DL) oder der einzelnen optischen Isomere, z.B. D-Na-Asparagat und L-Na-Asparagat; Succinate wie die Triton^{®}-Marken von Rohm und
Haas; Polyvinylverbindungen wie modifiziertes Polyvinylpyrrolidon wie die Luviskol^{®}-Marken von BASF und die Agrimer^{®}-Marken von ISP oder die derivatisierten Polyvinylacetate wie die Mowilith^{®}-Marken von Clariant oder die Polyvinylbutyrate wie die Lutonal^{®}-Marken von der BASF, die Vinnapas^{®}- und die Pioloform^{®}-Marken von Wacker oder die modifizierten Polyvinylalkohole wie die Mowiol^{®}-Marken von Clariant. Bevorzugte Humectants sind mehrwertige Alkohole wie Ethylenglykol oder Propylenglykol sowie Milchsäure und Milchsäurederivate wie Milchsäuresalze, z.B. Alkali-, Erdalkali- oder Ammoniummilchsäuresalze wie Na-Lactat z.B. in Form ihrer Racemate (DL) oder der einzelnen optischen Isomere z.B. D-Na-Lactat und L-Na-Lactat.

Üblicherweise enthalten die erfindungsgemäßen herbiziden Mittel
a) 0,0001 bis 99 Gew.-%, vorzugsweise 0,1 bis 95 Gew.-%, Mesosulfuron oder deres Natriumsalz,
b) 0,1 bis 97 Gew.-% eines oder mehrerer Tenside vom Typ der C₈-C₂₀-Alkylpolyglykolethersulfate, und
c) 0,1 bis 90 Gew.-% eines oder mehrerer Humectants.

Die erfindungsgemäßen herbiziden Mittel zeigen ausgezeichnete herbizide Wirkung. Aufgrund der verbesserten Kontrolle der Schadpflanzen durch die erfindungsgemäßen herbiziden Mittel wird es möglich, die Aufwandmenge zu senken und/oder die Sicherheitsmarge zu erhöhen. Beides ist sowohl ökonomisch als auch ökologisch sinnvoll.

In bevorzugter Ausführungsform kennzeichnen sich erfindungsgemäße herbizide Mittel dadurch, daß sie einen synergistisch wirksamen Gehalt einer Kombination der Herbizide a) mit Tensiden b) und Humectants c) aufweisen. Dabei ist vor allem hervorzuheben, daß selbst in Kombinationen mit Aufwandmengen oder Gewichtsverhältnissen von a) : b): c) bei denen ein Synergismus nicht in jedem Falle ohne weiteres nachzuweisen ist - etwa weil die Einzelverbindungen üblicherweise in der Kombination in sehr unterschiedlichen Aufwandmengen eingesetzt werden oder auch weil die Kontrolle der Schadpflanzen bereits durch die Einzelverbindungen sehr gut ist - den herbiziden Mitteln der Erfindung in der Regel eine synergistische Wirkung inhärent ist.

Die Herstellung der erfindungsgemäßen herbiziden Mittel erfolgt durch übliche Verfahren, z.B. Mahlen, Mischen, Lösen oder Dispergieren der Einzelkomponenten.

Die Komponenten a), b) und c) der erfindungsgemäßen herbiziden Mittel können zusammen in einer Fertigformulierung enthalten sein, die dann in üblicher Weise, z.B. im Form einer Spritzbrühe appliziert werden kann oder sie können separat formuliert werden und z.B. im Tank-Misch-Verfahren oder nacheinander appliziert werden. Wenn die Komponenten separat formuliert werden, können die Komponenten a), b) und c) z.B. jeweils einzeln formuliert werden oder die Komponenten a) und b), a) und c) oder b) und c) können gemeinsam formuliert werden und die jeweilige Drittkomponente wird separat formuliert.

Die erfindungsgemäßen herbiziden Mittel können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), wasserlösliche Pulver (SP), wasserlösliche Konzentrate, emulgierbare Konzentrate (EC), Emulsionen (EW), wie Öl-in-Wasser- und Wasser-in-Öl-Emulsionen, versprühbare Lösungen, Suspensionskonzentrate (SC), Dispersionen auf Öl- oder Wasserbasis, ölmischbare Lösungen, Kapselsuspensionen (CS), Stäubemittel (DP), Beizmittel, Granulate für die Streu- und Bodenapplikation, Granulate (GR) in Form von Mikro-, Sprüh-, Aufzugs- und Adsorptionsgranulaten, wasserdispergierbare Granulate (WG), wasserlösliche Granulaten (SG), ULV-Formulierungen, Mikrokapseln und Wachse. Diese einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K Martens, "Spray Drying" Handbook, 3rd Ed. 1979, G. Goodwin Ltd. London.

Die notwendigen Formulierungshiffsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen agrochemischen Wirkstoffen wie Insektiziden, Akariziden, Herbiziden, Fungiziden, Safenem, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Herbizid a) und / oder Tensid b) und / oder Humectant c) noch Verdünnungs- oder Inertstoffe und gegebenenfalls noch weitere Tenside ionischer und/oder nichtionischer Art (Netzmittel, Dispergiermittel) z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die Herbizide a) und/oder Tenside b) und/oder Humectants c) beispielsweise in üblichen Apparaturen wie Hammermühlen, Gebläsemühlen und Luftstrahlmühlen feingemahlen und gleichzeitig oder anschließend mit den Formulierungshilfsmitteln vermischt.

Emulgierbare Konzentrate werden durch Auflösen des Herbizids a) und/oder Tensids b) und/oder Humectants c) in einem organischen Lösungsmittel z.B. Butanol, Cyclohexanon, Dimethylformamid, Xylol oder auch höhersiedenden Aromaten oder Kohlenwasserstoffen oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanester wie z.B. Sorbitanfettsäureester oder Polyoxethylensorbitanester wie z.B. Polyoxyethylensorbitanfettsäureester.

Stäubemittel erhält man durch Vermahlen des Herbizids a) und/oder Tensids b) und/oder Humectants c) mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Herbizids a) und/oder Tensids b) und/oder Humectants c) auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Herbizide a) und/oder Tensids b) und/oder Humectants c) in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J. D. Freyer, S.A. Evans, "Weed Control Handbook", 5th Ed., Blackwell Scientific Publications, Oxford, 1968, Seiten 101-103.

Daneben enthalten die genannten Wirkstofformulierungen gegebenenfalls die jeweils üblichen Zusatzstoffe wie Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel. -

Der Einsatz der erfindungsgemäßen herbiziden Mittel kann im Vor- oder im Nachauflaufverfahren erfolgen, z. B. durch Spritzung. Durch den Einsatz der erfindungsgemäßen herbiziden Mittel kann der zur Unkrautbekämpfung notwendige Präparateaufwand wesentlich reduziert werden.

Die erfindungsgemäß zu verwendenden Herbizide a) werden in der Regel zusammen mit dem bzw. den Tensiden b) und Humectants c) oder hintereinander ausgebracht, vorzugsweise in Form einer Spritzbrühe, welche die Herbizide a), die Tenside b) und die Humectants c) in wirksamen Mengen und gegebenenfalls weitere übliche Hilfsmittel enthält. Die Spritzbrühe wird bevorzugt auf Basis von Wasser und / oder einem Öl, z.B. einem hochsiedenden Kohlenwasserstoff wie Kerosin oder Paraffin hergestellt. Dabei können die erfindungsgemäßen herbiziden Mittel als Tankmischung oder über eine "Fertig-Formulierung" realisiert werden.

In Spritzpulvern beträgt die Wirkstoffkonzentration z.B. etwa 10 bis 90 Gew.-%, der Rest zu 100 Gew.-% besteht aus üblichen Formulierungsbestandteilen. Bei emulgierbaren Konzentraten kann die Wirkstoffkonzentration etwa 1 bis 90, vorzugsweise 5 bis 80 Gew.-% betragen. Staubförmige Formulierungen enthalten 1 bis 30 Gew.-% Wirkstoff, vorzugsweise meistens 5 bis 20 Gew.-% an Wirkstoff, versprühbare Lösungen enthalten etwa 0,05 bis 80, vorzugsweise 2 bis 50 Gew.-% Wirkstoff. Bei wasserdispergierbaren Granulaten hängt der Wirkstoffgehalt zum Teil davon ab, ob die wirksame Verbindung flüssig oder fest vorliegt und welche Granulierhilfsmittel, Füllstoffe usw. verwendet werden. Bei den in Wasser dispergierbaren Granulaten liegt der Gehalt an Wirkstoff beispielsweise zwischen 1 und 95 Gew.-%, vorzugsweise zwischen 10 und 80 Gew.-%.

Der Anteil an Tensid b) in konzentrierten Formulierungen kann naturgemäß nicht beliebig erhöht werden, ohne die Stabilität der Formulierung zu beeinträchtigen. In den konzentrierten Formulierungen ist das Gewichtsverhältnis Herbizid a): Tensid b) im allgemeinen von 1000:1 bis 1:10000, vorzugsweise 200:1 bis 1:200; das Gewichtsverhältnis Herbizid a): Humectant c) ist im allgemeinen von 1000:1 bis 1:10000, vorzugsweise 200:1 bis 1:200; und das Gewichtsverhältnis Tensid b): Humectant c) ist im allgemeinen 1000:1 bis 1:1000, vorzugsweise 200:1 bis 1:200.

Bei der Applikation ist das Gewichtsverhältnis Herbizid a): Tensid b) im allgemeinen im Bereich 1000:1 bis 1:100.000, insbesondere 200:1 bis 1:1000 in Abhängigkeit von der Wirksamkeit des jeweiligen Herbizids. Das Gewichtsverhältnis Herbizid a): Humectant c) ist bei der Applikation im allgemeinen im Bereich 1000:1 bis 1:100000, insbesondere 200:1 bis 1:200 in Abhängigkeit von der Wirksamkeit des jeweiligen Herbizids. Das Gewichtsverhältnis Tensid b): Humectant c) ist bei der Applikation im allgemeinen im Bereich von 1000:1 bis 1:1000, vorzugsweise 200:1 bis 1:200.

Bei der Applikation ist die Konzentration an Herbizid a) im allgemeinen bei 0,0001 bis 20 Gew.-%, vorzugsweise bei 0,01 bis 3 Gew.-% in dem applizierten Mittel, z.B. der Spritzbrühe bei einer Aufwandmenge von 5 bis 4000 I/ha, vorzugsweise 100 bis 600 I/ha. Die Konzentration an Tensid b) ist im allgemeinen bei 0,001 bis 5 Gew.-%, vorzugsweise 0,1 bis 2,0 Gew.-%, insbesondere 0,1 bis 0,5 Gew.-% in dem applizierten Mittel, z.B. der Spritzbrühe bei einer Aufwandmenge von 5 bis 4000 I/ha, vorzugsweise 100 bis 600 I/ha. Die Konzentration an Humectant c) ist im allgemeinen bei 0,001 bis 20 Gew.-%, vorzugsweise bei 0,01 bis 5 Gew.-% Humectant c) in dem applizierten Mittel, z.B. der Spritzbrühe bei einer Aufwandmenge von 5 bis 4000 I/ha, vorzugsweise 100 bis 600 I/ha.

Vorzugsweise enthalten die erfindungsgemäßen herbiziden Mittel neben den Komponenten a), b) und c) noch Wasser und gegebenenfalls organische Lösungsmittel und werden in Form einer wäßrigen konzentrierten Dispersion oder Emulsion formuliert oder als Tankmix in Form einer verdünnten Dispersion, Emulsion oder Lösung mit einem Verdünnungsgrad bis zu dem der gebrauchsfertigen Spritzbrühe hergestellt. Besonders bevorzugt ist ein als Tankmix hergestelltes herbizides Mittel, das zur Anwendung die bevorzugten Mengen an Herbizid a), Tensid b) und Humectant c) enthält.

Auch Mischungen oder Mischungsformulierungen mit anderen Wirkstoffen, wie z.B. Insektiziden, Akariziden, Herbiziden, Fungiziden, Safenern, Düngemitteln und/oder Wachstumsregulatoren sind gegebenenfalls möglich.

Zur Anwendung werden in handelsüblicher Form vorliegende konzentrierte Formulierungen gegebenenfalls in üblicher Weise verdünnt, Spritzpulver, emulgierbare Konzentrate, Dispersionen und wasserdispergierbare Granulate z.B. mittels Wasser. Staubförmige Zubereitungen, Sprüh- und Absorptionsgranulate, versprühbare Lösungen sowie als Tankmix hergestellte Spritzbrühen werden vor der Anwendung üblicherweise nicht mehr mit weiteren inerten Stoffen verdünnt. Allerdings kann es vorteilhaft oder notwendig sein, den Spritzbrühen weitere Mengen an Tensiden b), Humectant c) und/oder andere übliche Hilfsmittel, insbesondere selbstemulgierende Öle oder Paraffinöle zuzugeben.
Mit den äußeren Bedingungen wie Temperatur, Feuchtigkeit, Art des verwendeten Herbizids, variiert die erforderliche Aufwandmenge der Herbizide a). Sie kann innerhalb weiter Grenzen schwanken, z.B. zwischen 0,001 und 10 kg/ha oder mehr Aktivsubstanz, vorzugsweise liegt sie jedoch zwischen 0,005 und 5 kg/ha.

Die erfindungsgemäßen herbiziden Mittel, weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt. Dabei ist es gleichgültig, ob die Substanzen im Vorsaat-, Vorauflauf- oder Nachauflaufverfahren ausgebracht werden. Im einzelnen seien beispielhaft einige Vertreter der mono- und dikotylen Unkrautflora genannt, die durch die erfindungsgemäßen herbiziden Mittel kontrolliert werden können, ohne daß durch die Nennung eine Beschränkung auf bestimmte Arten erfolgen soll.

Auf der Seite der monokotylen Unkrautarten werden z.B. Avena, Lolium, Alopecurus, Phalaris, Echinochloa, Digitaria, Setaria sowie Bromusarten wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Galium, Viola, Veronica, Lamium, Stellaria, Amaranthus, Sinapis, Ipomoea, Matricaria, Abutilon und Sida auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z. B. Echinochloa, Sagittaria, Alisma, Eleocharis, Scirpus und Cyperus werden von den erfindungsgemäßen Mitteln ebenfalls hervorragend bekämpft.

Werden die erfindungsgemäßen herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der erfindungsgemäßen herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Obgleich die erfindungsgemäßen herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, insbesondere Soja, oder Gramineen-Kulturen wie Weizen, Gerste, Roggen, Reis oder Mais, nur unwesentlich oder gar nicht geschädigt. Die vorliegenden Verbindungen eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die erfindungsgemäßen herbiziden Mittel hervorragende wachstumsregulatorische Eigenschaften bei Kulturpflanzen auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die erfindungsgemäßen herbiziden Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die erfindungsgemäßen Mittel als Herbizide in Nutzpflanzenkulturen eingesetzt werden, welche gegenüber den phytotoxischen Wirkungen der Herbizide resistent sind bzw. gentechnisch resistent gemacht worden sind.

Bei der Anwendung der erfindungsgemäßen herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist somit auch die Verwendung der erfindungsgemäßen Mittel als Herbizide zur Bekämpfung von Schadpflanzen, vorzugsweise in Pflanzenkulturen, wobei die Pflanzenkulturen auch transgene Pflanzenkulturen sein können.

Die erfindungsgemäßen herbiziden Mittel können auch nicht-selektiv zur Bekämpfung unerwünschten Pflanzenwuchses eingesetzt werden, z.B. in Plantagenkulturen, an Wegrändem, Plätzen, Industrieanlagen oder Eisenbahnanlagen.

Aufgrund der relativ geringen Aufwandmenge der erfindungsgemäßen herbiziden Mittel ist deren Verträglichkeit in aller Regel schon sehr gut. Insbesondere wird durch die erfindungsgemäßen Kombinationen eine Senkung der absoluten Aufwandmenge erreicht, verglichen mit der Einzelanwendung eines herbiziden Wirkstoffs.

Gegenstand der Erfindung ist deshalb auch ein Verfahren zur Bekämpfung von Schadpflanzen, vorzugsweise zur selektiven Bekämpfung von Schadpflanzen in Nutzpflanzenkulturen, **dadurch gekennzeichnet, daß** man eine herbizid wirksame Menge der genannten Herbizide a) in Kombination mit mindestens einem der Tenside b) und mindestens einem Humectant c) appliziert, z.B. im Vorauflauf, Nachauflauf oder im Vor- und Nachauflauf, vorzugsweise im Vorauflauf, zusammen oder hintereinander, auf die Pflanzen, Pflanzenteile, Pflanzensamen oder die Fläche auf der die Pflanzen wachsen, z.B. die Anbaufläche.

In bevorzugter Verfahrensvariante werden die Herbizide a) in Aufwandmengen von 0,1 bis 2000 g Aktivsubstanz/ha, bevorzugt von 0,5 bis 1000 g Aktivsubstanz/ha, ausgebracht. Weiterhin besonders bevorzugt ist die Ausbringung der Wirkstoffe in Form einer Fertigformulierung oder in Form von Tankmischungen, wobei die Einzelkomponenten, z.B. in Form von Formulierungen, gemeinsam im Tank mit Wasser gemischt werden und die erhaltene Spritzbrühe ausgebracht wird.

Da die Kulturpflanzenverträglichkeit der erfindungsgemäßen Kombinationen bei gleichzeitig sehr hoher Kontrolle der Schadpflanzen ausgesprochen gut ist, können diese als selektiv angesehen werden. In bevorzugter Verfahrensabwandlung werden herbizide Mittel mit den erfindungsgemäßen Wirkstoffkombinationen daher zur selektiven Bekämpfung unerwünschter Pflanzen eingesetzt.

Um die Verträglichkeit und/oder Selektivität der erfindungsgemäßen herbiziden Mittel gewünschtenfalls noch zu steigern kann es von Vorteil sein, diese gemeinsam in Mischung oder zeitlich - getrennt nacheinander zusammen mit Safenem oder Antidots anzuwenden.

Als Safener oder Antidots für die erfindungsgemäßen herbiziden Mittel in Frage kommende Verbindungen sind z. B. aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91108202) und PCT/EP 90102020 (WO-911078474) und dort zitierter Literatur bekannt oder können nach den dort beschriebenen Verfahren hergestellt werden. Weitere geeignete Safener kennt man aus EP-A-94 349 (US-A-4,902,304), EP-A-191 736 (US-A-4,881,966) und EP-A-0 492 366 und der dort zitierten Literatur.

In einer bevorzugten Ausführungsform enthalten die herbiziden Mittel der vorliegenden Erfindung daher einen zusätzlichen Gehalt an einer oder mehrerer Verbindungen, die als Safener oder Antidots wirken.

Besonders bevorzugte Antidots oder Safener oder Gruppen von Verbindungen die sich als Safener oder Antidots für die oben beschriebenen herbiziden Mittel der Erfindung eignen sind unter anderem:
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (Verbindung S1 -1, Mefenpyr-diethyl) und verwandte Verbindungen, wie sie in der internationalen Anmeldung WO91/07874 (PCT/EP 90102020) beschrieben sind;
b) Derivate der Dichlorphenylpyrazolcarbonsäure, vorzugsweise Verbindungen wie 1-(2,4-Dichlorphenyl)-5-methyl-pyrazol-3-carbonsäureethylester (Verbindung S1-2), 1-(2,4-Dichlorphenyl)-5-isopropyl-pyrazol-3-carbonsäureethylester (Verbindung S1 -3), 1-(2,4-Dichlorphenyl)-5-(1,1-dimethyl-ethyl)pyrazol-3-carbonsäureethylester (Verbindung S1-4), 1-(2,4-Dichlorphenyl)-5-phenyl-pyrazol-3-carbonsäureethylester (Verbindung S1-5) und verwandte Verbindungen, wie sie in EP-A-0 333 131 und EP-A-0 269 806 beschrieben sind;
c) Verbindungen vom Typ der Triazolcarbonsäuren, vorzugsweise Verbindungen wie 1-(2,4-Dichlorphenyl)-5-trichlormethyl-(1 H)-1,2,4-triazol-3-carbonsäureethylester (Verbindung S1-6, Fenchlorazol) und verwandte Verbindungen (siehe EP-A-0 174 562 und EP-A-0 346 620);
d) Verbindungen vom Typ der Dichlorbenzyl-2-isoxazolin-3-carbonsäure, Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (Verbindung S1 -7) oder 5-Phenyl-2-isoxazolin-3-carbonsäureethylester (Verbindung S 1-8) und verwandte Verbindungen wie sie in der internationalen Patentanmeldung WO 91/08202 (PCT/EP 90/01966) beschrieben sind;
e) Verbindungen vom Typ der 8-Chinolinoxyessigsäure, vorzugsweise Verbindungen wie (5-Chlor-8-chinolinoxy)-essigsäure-(1 -methyl-hex-1 -yl)-ester (S2-1; Cloquintocet-mexyl),
   (5-Chlor-8-chinofinoxy)-essigsäure-(1,3-dimethyl-but-1-yl)- ester (S2-2),
   (5-Chlor-8-chinolinoxy)-essigsäure-4-allyl-oxy-butylester (S2-3),
   (5-Chlor-8-chinolinoxy)-essigsäure-1 -allyl-oxy-prop-2-ylester (S2-4),
   (5-Chlor-8-chinolinoxy)-essigsäureethylester (S2-5),
   (5-Chlor-8-chinolinoxy)-essigsäuremethylester (S2-6),
   (5-Chlor-8-chinolinoxy)-essigsäureallylester (S2-7),
   (5-Chlor-8-chinolinoxy)-essigsäure-2-(2-propyliden-iminoxy)-1-ethylester
   (S2-8), (5-Chlor-8-chinolinoxy)-essigsäure-2-oxo-prop-1-ylester (S2-9) und verwandte Verbindungen wie sie in EP-A-0 086 750, EP-A-0 094 349 und EP-A-0 191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-mahnsäurediallylester, (5-Chlor-8-chinolinoxy)-malonsäuremethylethylester und verwandte Verbindungen wie sie in der deutschen Patentanmeldung EP-A-0 582 198 beschrieben und vorgeschlagen worden sind;
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxy-propionsäure (Mecoprop), MCPA oder 3,6-Dichlor-2-methoxy-benzoesäure(ester) (Dicamba).
h) Verbindungen vom Typ der 5,5-Diphenyl-2-isoxazolin-3-carbonsäure, vorzugsweise 5,5-Diphenyl-2-isoxazolin-3-carbonsäureethylester (S3-1, Isoxadifen-ethyl).
i) Verbindungen, die als Safener z.B. für Reis bekannt sind wie Fenclorim (= 4,6-Dichlor-2-phenylpyrimidin, Pesticide Manual, 11. Auflage, 1997, S. 511-512), Dimepiperate (= Piperidin-1 -thiocarbonsäure-S-1 -methyl-1 -phenylethylester, Pesticide Manual, 11. Auflage, 1997, S. 404-405), Daimuron (= 1 -(1 -Methyl- 1-phenylethyl)-3-p-tolyl-harnstoff, Pesticide Manual, 11. Auflage, 1997, S. 330), Cumyluron (= 3-(2-Chlorphenylmethyl)-1 -(1-methyl-1-phenyl-ethyl)- harnstoff, JP-A-601087254), Methoxyphenon (= 3,3'-Dimethyl-4-methoxy- benzophenon, CSB (= 1-Brom-4-(chlormethylsulfonyl)-benzol, CAS-Reg. Nr. 54091-06-4).

Die genannten Verbindungen sind außerdem zumindest teilweise in der EP-A-0 640 587 beschrieben, auf die hiermit zu Offenbarungszwecken Bezug genommen wird.
j) Eine weitere wichtige Gruppe von als Safenem und Antidoten geeignete Verbindungen ist aus der WO 95107897 bekannt.

Die Safener (Antidote) der vorstehenden Gruppen a) bis j) reduzieren oder unterbinden phytotoxische Effekte, die beim Einsatz der herbiziden Mittel gemäß der Erfindung in Nutzpflanzenkulturen auftreten können, ohne die Wirksamkeit der Herbizide gegen Schadpflanzen zu beeinträchtigen. Hierdurch kann das Einsatzgebiet der erfindungsgemäßen herbiziden Mittel erheblich erweitert werden und insbesondere ist durch die Verwendung von Safenern der Einsatz von herbiziden Mitteln möglich, die bislang nur beschränkt oder mit nicht ausreichendem Erfolg eingesetzt werden konnten, d. h. von Kombinationen, die ohne Safener in niedrigen Dosierungen mit wenig Breitenwirkung zu nicht ausreichender Kontrolle der Schadpflanzen führten.

Die Komponenten a), b) und c) der herbiziden Mittel gemäß der Erfindung und die erwähnten Safener können zusammen (z.B. als fertige Formulierung oder im Tankmisch-Verfahren) oder in beliebiger Reihenfolge nacheinander ausgebracht werden. Das Gewichtsverhältnis Safener:Herbizid (Verbindung(en) der Formel (I) und/oder ihre Salze) kann innerhalb weiter Grenzen variieren und liegt vorzugsweise im Bereich von 1 : 100 bis 100 : 1, insbesondere von 1 : 100 bis 50: 1. Die jeweils optimalen Mengen an Herbizid(en) und Safener(n) sind üblicherweise vom Typ des herbiziden Mittels und/oder vom verwendeten Safener sowie von der Art des zu behandelnden Pflanzenbestandes abhängig.

Die Safener können je nach ihren Eigenschaften zur Vorbehandlung des Saatgutes der Kulturpflanze (Beizung der Samen) verwendet werden oder vor der Saat in die Saatfurchen eingebracht oder zusammen mit der Herbizidmischung vor oder nach dem Auflaufen der Pflanzen angewendet werden.
Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit der Herbizidmischung. Hierzu können Tankmischungen oder Fertigformulierungen eingesetzt werden.

Die benötigten Aufwandmengen der Safener können je nach Indikation und verwendetem Herbizid innerhalb weiter Grenzen schwanken und liegen in der Regel im Bereich von 0,001 bis 1 kg, vorzugsweise 0,005 bis 0,2 kg Wirkstoff je Hektar.

Die Ausbringung der erfindungsgemäßen herbiziden Mittel kann in üblicher Weise erfolgen, zum Beispiel mit Wasser als Träger in Spritzbrühmengen von etwa 5 bis 4000 Liter/ha. Eine Anwendung der Mittel im sog. Low-Volume- und Ultra-Low-Volume-Verfahren (ULV) ist ebenso möglich wie ihre Applikation in Form von Granulaten und Mikrogranulaten.

Eine bevorzugte Verwendung betrifft den Einsatz von herbiziden Mitteln, die Gehalte an Komponenten a), b) und c) in einer synergistisch wirksamen Menge aufweisen. Zur Erfindung gehören auch Mischungen von einem oder mehreren Herbiziden a), mit einem oder mehreren Tensiden b) und einem oder mehreren Humectants c).

Daneben können in den herbiziden Mitteln der Erfindung zur Abrundung der Eigenschaften, meist in untergeordneten Mengen, zusätzlich eines, zwei oder mehrere von dem Herbizid a) verschiedene agrochemische Wirkstoffe (z.B. Herbizide, Insektizide, Fungizide, Safener) enthalten sein.

Damit ergeben sich zahlreiche Möglichkeiten mehrere Wirkstoffe miteinander zu kombinieren und gemeinsam zur Bekämpfung von Schadpflanzen in Pflanzenkulturen einzusetzen, ohne vom Gedanken der Erfindung abzuweichen.

So können in einer bevorzugten Ausführungsform z.B. verschiedene Wirkstoffe miteinander kombiniert werden, z.B.
Mesosulfuron-methyl + lodosulfuron-methyl,
Mesosulfuron-methyl + lodosulfuron-methyl-Natrium,
Mesosulfuron-methyl + Foramsulfuron,
Mesosulfuron-methyl + Foramsulfuron-Natrium,
Mesosulfuron-methyl-Natrium + lodosulfuron-methyl,
Mesosulfuron-methyl-Natrium + lodosulfuron-methyl-Natrium,
Mesosulfuron-methyl-Natrium + Foramsulfuron,
Mesosulfuron-methyl-Natrium + Foramsulfuron-Natrium.

Die herbiziden Wirkstoffe a) und deren Mischungen, z.B. die vorgenannten Wirkstoffmischungen von Wirkstoffen, können vorzugsweise mit einem C₈-C₂₀-Alkylpolyglykolethersulfat wie C₁₂/C₁₄-Fettalkoholdiglykolethersulfat-Natrium (Handelsname z.B. Genapol^{®} LRO, Clariant GmbH) als Komponente b) und einem Milchsäurederivat wie Natrium-Lactat als Komponente c) kombiniert werden. Darüber hinaus können vorzugsweise einer oder mehrere Safener enthalten sein, insbesondere die Safener Mefenpyr-diethyl (S1-1), Cloquintocet-mexyl (S2-1) und Isoxadifen-ethyl (S3-1).

Zusammenfassend kann gesagt werden, daß die erfindungsgemäßen herbiziden Mittel ausgezeichete herbizide Wirkung aufweisen, und in einer bevorzugten Ausführungsform überadditive (= synergistische) Effekte auftreten. Dabei ist die Wirkung in den Kombinationen stärker als die der eingesetzten Einzelkomponenten bei alleiniger Anwendung.

Diese Effekte erlauben unter anderem eine Reduzierung der Aufwandmenge, die Bekämpfung eines breiteren Spektrums von Unkräutern und Ungräsem, die Schließung von Wirkungslücken, eine schnellere und sicherere Wirkung, eine längere Dauerwirkung, eine komplette Kontrolle der Schadpflanzen mit nur einer oder wenigen Applikationen, und eine Ausweitung des Anwendungszeitraumes.
Die genannten Eigenschaften sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch die erfindungsgemäßen Kombinationen bezüglich der beschriebenen Eigenschaften deutlich übertroffen. So zeigt sich eine wesentlich verbesserte Wirkungssicherheit unter verschiedenen Umweltbedingungen.

Die nachfolgenden Ausführungsbeispiele erläutern die Erfindung und haben keinerlei limitierenden Charakter.

### A. Herstellung der Spritzbrühen

Es wurde eine Wasseraufwandmenge von 300I/ha vorgelegt. Anschließend wurden die Einzelkomponenten Herbizid, Tensid und Humectant gemäß der in Tabellen 1-4 angegebenen Art und Aufwandmengen unter Rühren zugegeben, so daß eine homogene Spritzbrühe entstand. Dabei wurden die Wirkstoffe Rimsulfuron und Nicosulfuron in den handelsüblichen Formulierungen Cato^{®} WG25 (Du Pont) bzw. Motivell^{®} (BASF) verwendet. Iodosulfuron-methyl-Natrium und Mesosulfuron-methyl wurden jeweils als 20-prozentige wasserdispergierbare Pulver eingesetzt. Foramsulfuron wurde als 50-prozentiges wasserdispergierbares Granulat verwendet. Als Tenside wurden Genapol^{®} LRO als 70-prozentige Paste (Clariant) sowie Synperonic^{®} A7 (Unichema) verwendet.
Als Humectants kamen Na-Lactat als 50-prozentige wässrige Lösung (Merck KGaA, Darmstadt) und Propylenglycol (Clariant) zur Anwendung.
Die Spritzapplikation wurde wie im Beispielteil beschrieben durchgeführt.

### B. Biologische Beispiele

Die nachfolgend verwendeten Abkürzungen bedeuten:

| g a.i./ha | Gramm Aktivsubstanz/Hektar | | |
|---|---|---|---|
| AVEFA | Avena fatua | ALOMY | Alopecurus myosuroides |
| BROTE | Bromus tectorum | DIGSA | Digitaria adscendens |
| ECHCG | Echinochloa crus-galli | LOLMU | Lolium multiflorum |

Die optische Bonitierung erfolgte nach einer Prozentskala von 0% = keine Schädigung bis 100% = alle Pflanzen abgestorben.

### Beispiel B.1

Samen der Schadpflanzen AVEFA und LOLMU wurden in einer Klimakammer in einem sandigem Lehmboden in 13er Rundtöpfen ausgesät und angegossen. Während der gesamten Versuchsdauer wurde das Substrat nur minimal bewässert. Es wurde eine Tagestemperatur von 18°C und eine Nachttemperatur von 16°C eingehalten, wobei durch eine Zusatzbeleuchtung mit Natriumdampfleuchten (ca. 7000 lux) eine einheitliche Tageslänge von 16 Stunden erreicht wurde. Die relative Luftfeuchtigkeit betrug 50%. Vier Wochen nach der Aussaat wurden die Pflanzen auf einer Laborspritzbahn mit gemäß Beispiel A hergestellten Spritzbrühe der Komponenten Mesosulfuron-methyl (A1), Natrium-Lactat und Genapol^{®} LRO behandelt. Die Wasseraufwandmenge für die Spritzapplikation der Präparate betrug 300 I/ha. Nach der Behandlung wurden die Pflanzen wieder in der Klimakammer aufgestellt. Die optische Bonitur 14 Tage nach der Applikation ergab die in Tabelle 1 aufgeführten Resultate.

**Tabelle 1 Wirkung [%] gegen Schadpflanzen**

| Komponenten | ga.i./ha | AVEFA | LOLMU |
|---|---|---|---|
| A1 | 60 | 10 | 10 |
| A1 | 60 | 20 | 50 |
| + Genapol^{®} LRO | 324 | | |
| A1 | 60 | 70 | 60 |
| + Genapol^{®} LRO | 324 | | |
| + Na-Lactat | 150 | | |

### Beispiel B.2

Samen der Schadpflanze BROTE wurden im Freiland in einem sandigem Lehmboden in 13er Rundtöpfen ausgesät und angegossen. Während der gesamten Versuchsdauer wurde das Substrat nur minimal bewässert. Vier Wochen nach der Aussaat wurden die Pflanzen auf einer Laborspritzbahn mit gemäß Beispiel A hergestellten Spritzbrühen der Komponenten Mesosulfuron-methyl (A1), Genapol^{®} LRO und Na-Lactat, A1, Synperonic^{®}A7 und Na-Lactat sowie A1, Genapol^{®} LRO und Propylenglykol behandelt. Die Wasseraufwandmenge für die Spritzapplikation der Präparate betrug 300 I/ha. Nach der Behandlung wurden die Pflanzen wieder im Freiland aufgestellt. Die optische Bonitur 28 Tage nach der Applikation ergab die in Tabelle 2 aufgeführten Resultate.

**Tabelle 2 Wirkung [%] gegen Schadpflanzen**

| Komponenten | ga.i./ha | BROTE |
|---|---|---|
| A1 | 10 | 12,5 |
| A1 | 10 | 12,5 |
| + Genapol^{®} LRO | 300 | |
| A1 | 10 | 42,5 |
| + Genapol^{®} LRO | 300 | |
| + Na-Lactat | 300 | |
| A1 | 10 | 10 |
| + Synperonic^{®} A7 | 300 | |
| A1 | 10 | 17,5 |
| + Synperonic^{®} A7 | 300 | |
| + Na-Lactat | 300 | |
| A1 | 10 | 27,5 |
| + Genapol^{®} LRO | 300 | |
| + Propylenglykol | 300 | |

### Beispiel B.3

Samen der Schadpflanze BROTE wurden in einem Gewächshaus in einem sandigem Lehmboden in 7er Rundtöpfen ausgesät und angegossen. Es wurde eine Tagestemperatur von 22 bis 24°C und eine Nachttemperatur von 16 bis 18°C eingehalten, wobei durch eine Zusatzbeleuchtung mit Natriumdampfleuchten (ca. 7000 lux) eine einheitliche Tageslänge von 16 Stunden erreicht wurde. Die relative Luftfeuchtigkeit betrug 60 bis 80%. Zwei Wochen nach der Aussaat wurden die Pflanzen auf einer Laborspritzbahn unter Verwendung einer Öldispersion enthaltend 1,5 Gew.-% Mesosulfuron-methyl (A1) und 4,5 Gew.-% Mefenpyr-diethyl (S1-1) sowie von Kombinationen der Öldispersion enthaltend 1,5 Gew.-% Mesosulfuron-methyl und 4,5 Gew.-% Mefenpyr-diethyl mit Genapol^{®} LRO (300 g Genapol^{®} LRO / ha) behandelt. Die Wasseraufwandmenge für die Spritzapplikation der Präparate betrug 300 I/ha. Nach der Behandlung wurden die Pflanzen wieder im Gewächshaus aufgestellt. Die optische Bonitur 28 Tage nach der Applikation ergab die in Tabelle 3 aufgeführten Resultate.

**Tabelle 3 Wirkung [%] gegen Schadpflanzen**

| Komponenten | g a.i. / ha | BROTE |
|---|---|---|
| A1* | 7,5 | 80 |
| | 11 | 87,5 |
| A1* | 7,5 | 85 |
| + Genapol^{®} LRO | 11 | 90 |

| | | |
|---|---|---|
| A1*: Mesosulfuron-methyl (A1) + Mefenpyr-diethyl (S1-1) | | |

## Patentansprüche

1. Herbizides Mittel enthaltend
a) Mesosulfuron-methyl oder dessen Natriumsalz,
b) eines oder mehrere Tenside vom Typ der C₈-C₂₀-Alkylpolyglykolethersulfate, und
c) eines oder mehrere Humectants.

2. Herbizides Mittel nach Anspruch 1, enthaltend als Komponente b) eines oder mehrere Salze von C₈-C₂₀-Alkylpolyglykolethersulfaten.

3. Herbizides Mittel nach Anspruch 1 oder 2, zusätzlich enthaltend eine oder mehrere weitere Komponenten aus der Gruppe enthaltend agrochemische Wirkstoffe, im Pflanzenschutz übliche Zusatzstoffe und Formulierungshilfsmittel.

4. Verfahren zur Bekämpfung von Schadpflanzen, worin die Komponenten a), b) und c) des herbiziden Mittels, definiert gemäß einem oder mehreren der Ansprüche 1 bis 3, im Vorauflauf, Nachauflauf oder im Vor- und Nachauflauf, zusammen oder hintereinander, auf die Pflanzen, Pflanzenteile, Pflanzensamen oder die Fläche auf der die Pflanzen wachsen, z.B. die Anbaufläche appliziert werden.

5. Verfahren nach Anspruch 4 zur selektiven Bekämpfung von Schadpflanzen in Pflanzenkulturen.

6. Verwendung des nach einem der Ansprüche 1 bis 3 definierten herbiziden Mittels zur Bekämpfung von Schadpflanzen.

7. Verfahren zur Herstellung eines herbiziden Mittels, definiert gemäß einem oder mehreren der Ansprüche 1 bis 3, wobei die Komponenten a), b) und c) gemischt werden.

8. Verfahren gemäß Anspruch 7, worin die Komponenten a), b) und c) im Tankmischverfahren gemischt werden.

## Claims

1. A herbicidal composition comprising
a) mesosulfuron-methyl or its sodium salt,
b) one or more surfactants of the type of the C₈-C₂₀-alkyl polyglycol ether sulfates, and
c) one or more humectants.

2. A herbicidal composition as claimed in claim 1, comprising, as component b), one or more salts of C₈-C₂₀-alkyl polyglycol ether sulfates.

3. A herbicidal composition as claimed in claim 1 or 2, additionally comprising one or more further components from the group consisting of agrochemical active substances, additives conventionally used in the art of crop protection, and formulation auxiliaries.

4. A method of controlling harmful plants, wherein components a), b) and c) of the herbicidal composition defined as in one or more of claims 1 to 3 are applied pre-emergence, post-emergence or pre- and post-emergence, together or in succession, to the plants, plant parts, plant seeds or the area in which the plants grow, e.g. the area under cultivation.

5. Method according to claim 4 for selectively controlling harmful plants in plant crops.

6. The use of the herbicidal composition as defined in any of claims 1 to 3 for controlling harmful plants.

7. A method for the preparation of a herbicidal composition defined as in one or more of claims 1 to 3, wherein components a), b) and c) are mixed.

8. A method as claimed in claim 7, wherein components a), b) and c) are mixed by the tank mix method.

## Revendications

1. Composition herbicide contenant
a) du mésosulfuron-méthyle ou son sel de sodium,
b) un ou plusieurs agents tensio-actifs du type des (alkyle en C₈ à C₂₀)polyglycoléthersulfates,
et
c) un ou plusieurs humectants.

2. Composition herbicide suivant la revendication 1, contenant comme composant b) un ou plusieurs sels d'(alkyle en C₈ à C₂₀)polyglycoléthersulfates.

3. Composition herbicide suivant la revendication 1 ou 2, contenant de plus un ou plusieurs autres composants du groupe comprenant des substances actives agrochimiques, des additifs d'emploi courant dans la protection des plantes et des auxiliaires de formulation.

4. Procédé de lutte contre des plantes parasites, dans lequel les composants a), b) et c) de la composition herbicide, définie selon une ou plusieurs des revendications 1 à 3, sont appliqués en prélevée, en post-levée ou en pré- et post-levée, conjointement ou successivement, sur les plantes, des parties de plantes, des semences de plantes ou la surface sur laquelle les plantes croissent, par exemple la surface cultivée.

5. Procédé suivant la revendication 4, destiné à la lutte sélective contre des plantes parasites dans des cultures de végétaux.

6. Utilisation de la composition herbicide définie selon l'une des revendications 1 à 3 pour la lutte contre des plantes parasites.

7. Procédé de préparation d'une composition herbicide, définie selon une ou plusieurs des revendications 1 à 3, dans lequel un mélange des composants a), b) et c) est formé.

8. Procédé suivant la revendication 7, dans lequel les composants a), b) et c) sont mélangés selon la technique de préparation d'un mélange extemporané.
